# EUROPEAN PATENT APPLICATION

(11) **EP 1 071 048 A2**
(43) Date of publication of application: **24.01.2001**
(21) Application number: 00114752.9
(22) Date of filing: 10.07.2000
(51) Int. Cl.: G07F 7/00, D06F 39/14

(54) **Device for the safety activation of household appliances and the like**

(30) Priority: 21.07.1999 IT MI990469 U
(71) Applicant: IAR-SILTAL S.p.A., 15040 Occimiano (AL) (IT)
(72) Inventor: Spadoni, Giovanni, 15040 Occimiano (Alessandria) (IT)
(74) Representative: Lecce, Giovanni

(57) **Abstract**

A device for the safety activation of household appliances and the like, especially for washing machines and dish-washers, comprises at least a safety contact (26), located on the electric feed line (28), that can be activated or deactivated by means of a card (20) provided with a microchip (22) and/or a magnetic band (24).

## Description

The present invention relates to an device as defined above, especially but not critically suitable to equip washing machines and dish-washers, utilized either in the domestic or the industrial field, or kitchen with electric or combined ovens and cooking plates.

As is known, machines of this kind, conventionally defined household appliances, have been diffused for a long time and show the widest functional and capacity characteristics. With special, however not exclusive, reference to washing machines and dish washers, a big problem concerns their activation which may cause severe drawbacks.

These household appliances, in fact, may be easily activated by whomever once they have been installed, i.e. provided with an electric connection and a connection with the water mains for feeding and draining.

In these conditions, that are usual, many of these household appliances may be started by the simple pressure of a push-button or the rotation of a knob that controls a timer or a selector. The danger that arises from this possibility concerns especially children who escape sometimes any controls. Obviously, an accidentally activated washing machine or dishwasher can create severe problems; for instance, if water feeding is excluded as the system is provided with one or more opening taps, the suction pump is all the same activated and runs idly, which leads to its overheating. Situations of this kind may compromise the functionality of the machine. As much severe drawbacks can occur if in the machine, for instance a front opening washing machine, alien items are introduced or items that are incompatible with the washing cycle that is subsequently activated.

Object of the present invention is to obviate the above drawbacks.

More particularly, object of the present invention is to realize a device for the safety activation of household appliances and the like, such as to prevent any movement of the machine to which it is applied without a specific consent.

A further object of the invention is to realize a device applicable to household appliances and the like, capable of ensuring a high level of resistance and reliability in the time, and also such as to be easily and economically realized.

These and still other objects are achieved by the device of the present invention which comprises at least a safety contact 26, located on the electric feeding line 28, activated and deactivated by means of a card 20 provided with a microchip 22 and/or a magnetic band 24.

The constructive and functional characteristics of the device for the safety activation of household appliances and the like of the present invention will be better understood thanks to the following description, wherein reference is made to the attached drawings that represent a preferred non-limiting embodiment, and wherein:
Figure 1 shows schematically in front view the control panel of a household appliance, for instance a washing machine, provided with a seat for the insertion of the means that allow the safety activation of said machine;
Figure 2 shows schematically a part of said activation means, constituted by a card suitable to store and unload specific data;
Figures 3 and 4 shows schematically the operating circuit of the device of the invention, interacting with said card and the electrical-mechanic gears or the like that activate the machine whereon the device is applied.

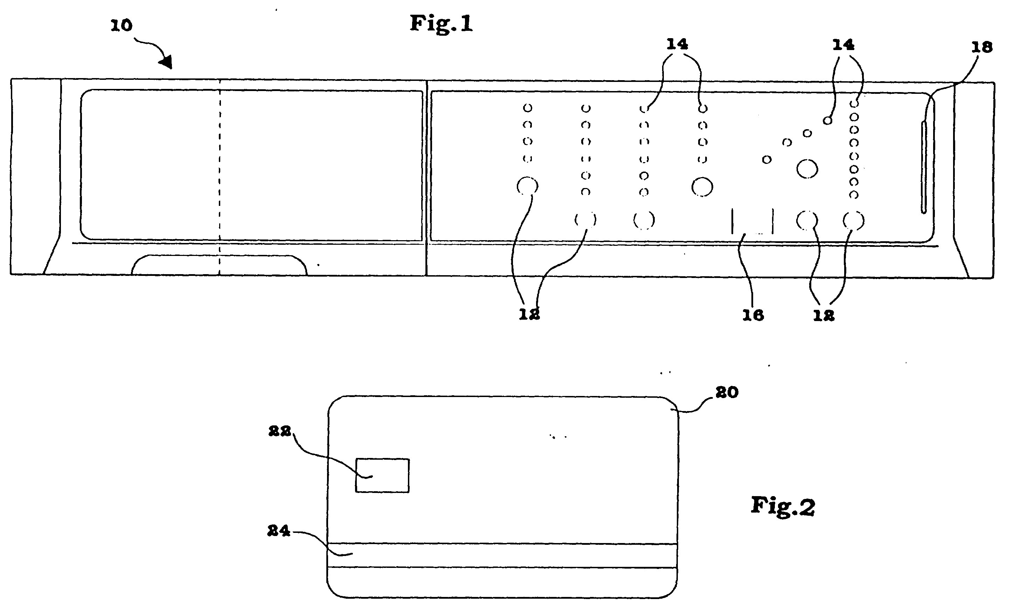

With reference to the above figures, the device for the safety activation of household appliances and the like of the present invention is applied, by way of example, to a washing machine whose front control panel or dashboard is indicated as a whole by 10. Said panel, which integrates conventional push-buttons, pilot lights and displays or visualizers, respectively schematized by 12, 14, 16, is provided with a seat intended for housing a card, indicated by 20 in Figure 2; the latter, having for instance the shape traditionally used for the known bank-cards or the so-called smart-cards, incorporates a microchip 22 or a magnetic band 24, wherein the data are stored that allow to activate the machine, the household appliance or the like.

The data contained in the card may be constituted, by way of example, by a numeric or alphanumeric code correlated to the activation device of said machine; alternatively, said code can allow to load in the electronic card of the machine, which will be illustrated later on, a part or the whole contents of the stored data. The latter solution is advantageous when the card is of the so-called "pre-paid" type, and therefore utilizable by the user in different machines.

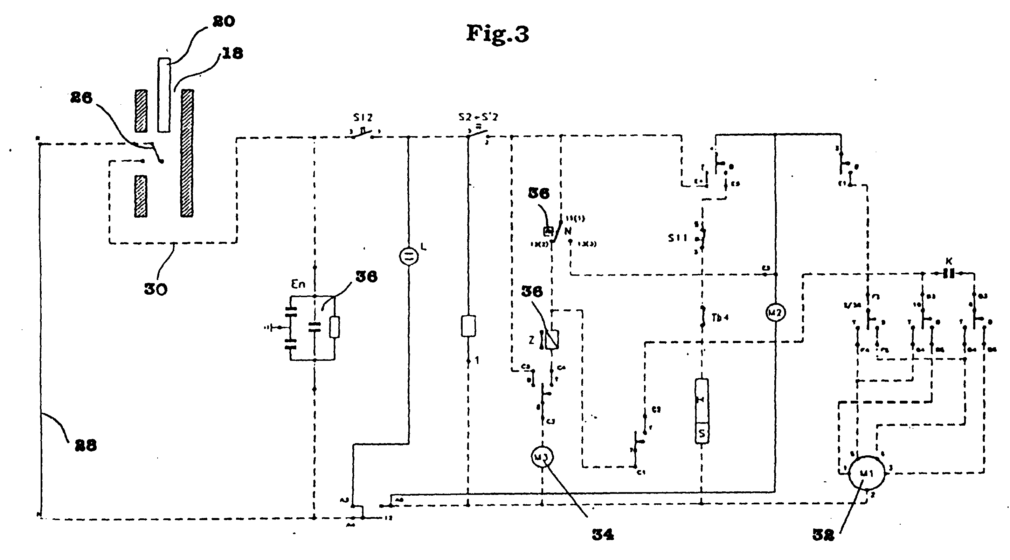

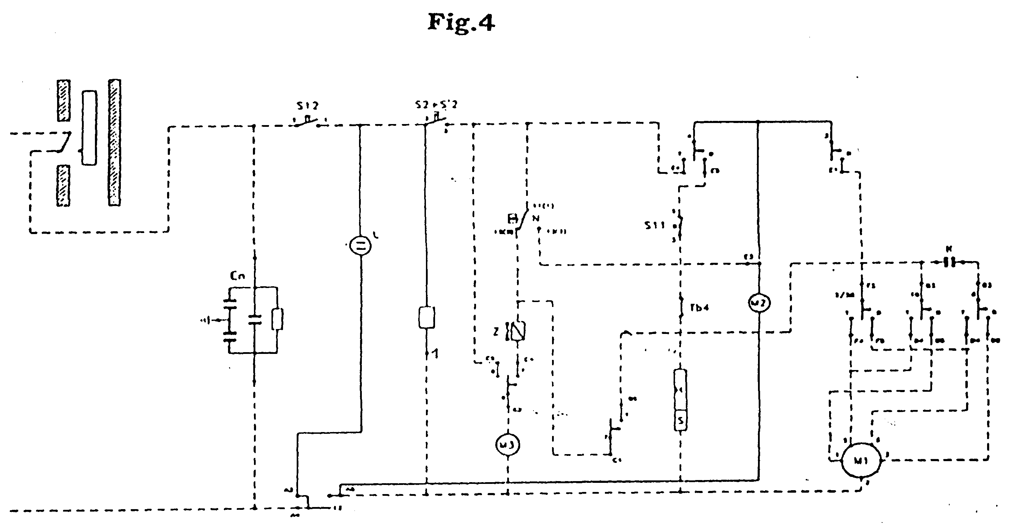

Figures 3 and 5 represent the functional diagram of the device of the invention, to stress the electric connection that realizes only in the presence of cart (20); in particular, Figure 3 shows the situation where the device cannot be activated, while Figure 4 shows the operating situation, ensuing from the positioning of card (20) in the special seat (18) of panel (10).

In seat (18) at least a safety contact (26) is located, connected to the electric line (28), that opens and closes the feeding circuit (30) and allows the activation of the machine, for instance a washing machine: some components of the latter are schematized by way of example, i.e. motor (32), pump (34), pressure switch and filter (36) and the associated connections to circuit (30).

Card (20) is provided with a microchip (22) or a magnetic card (24), through which the safety contact (26) is activated in a substantially known manner; as can be inferred from Figure 4, contact (26) is closed when card (20) is inserted in seat (18) and the device is therefore electrically connected with the electric line (28).

Said card is therefore the only activation key of the device, which may be provided with an electrical-mechanic or electronic unit, of a known type, suitable to store the whole washing program selected by the user after the insertion of said card in seat (18); in this way, once the washing cycle has been started, card (20) may also been removed from seat (18) and put away in a safe place without causing the opening of the safety contact (26), ensuring therefore the entire completion of said cycle.

According to a preferred embodiment, card (20) is of the so-called subtractive or pre-paid type, i.e., utilizable for a prefixed number of washing cycles; a fixed number of actionable operating sequences corresponding to as many washing cycles of a given duration is stored in microchip (22). Once this potentiality is exhausted, card (20) must be replaced. Incidentally, such an arrangement allows to realize promotion activities, as card (20) may be supplied free to the user, for instance by the producers of detergents to be utilized for washing.

As can be understood from the above description, the advantages achieved by the invention are obvious. The device for the safety activation of household appliances of the present invention excludes the danger of undesired or accidental activation of said machines, as the connection depends on the introduction of card (20) in the special seat (18); the operation takes place therefore only when the user, being present, can control the washing cycle.

However, the invention, as described hereinabove and claimed hereafter, has been only proposed by way of non critical example, being understood that the same is susceptible of many modifications and variants, all of which fall in any case within the scope of the inventive concept.

For instance, the device of the present invention may comprise electronic and/or electrical-mechanic units for gathering from the card one or more codes intended for supplying the consent for the start of the washing cycles, as well as a panel with numeric or alphanumeric keys to set up said code(s) and a display for the visual and direct information on the washing cycles that are still available with the card of the subtractive or pre-paid type.

Lastly, while the device of the invention is especially intended for machines such as washing machines or dish-washers, the possibility of employing the same for different appliances, for instance, electric kitchen, is not to be excluded.

## Claims

1. A device for the safety activation of household appliances and the like, especially for washing machines and dish-washers, comprises at least a safety contact (26), located on the electric feed line (28), that can be activated or deactivated by means of a card (20) provided with a microchip (22) and/or a magnetic band (24).

2. The device according to claim 1, characterized in that at least a safety contact is located in or connected to a seat (18) for card (20) obtained on a panel (10) of the washing machine and the like.

3. The device according to the preceding claims, characterized in that contact (26) opens and closes the feeding circuit (30) derived from the electric line (28) to which at least motor (32) of the washing machine is connected.

4. The device according to the preceding claims, characterized in that card (20) is of the subtractive or pre-paid type and microchip (22) or the magnetic band (24) interact with the safety contact(s) (26) through an electronic or electrical-mechanic unit.

5. The device according to the preceding claims, characterized in that it comprises a panel with numeric or alphanumeric keys for setting up one or more safety codes connected to card (20).

6. The device according to the preceding claims, characterized in that it comprises a display for the visual survey of the data stored in card (20).
